# EUROPEAN PATENT APPLICATION

(11) **EP 1 138 206 A1**
(43) Date of publication of application: **04.10.2001**
(21) Application number: 01107460.6
(22) Date of filing: 27.03.2001
(51) Int. Cl.: A23C 11/10, A23C 20/02, A23L 1/20

(54) **A method for the production of soybean juice from soybean fine powder and tofu using said juice as a raw material**

(30) Priority: 28.03.2000 JP 2000088651
(71) Applicant: Iwamoto, Yoshinori, Kyoto (JP)
(72) Inventor: Iwamoto, Yoshinori, Kyoto (JP)
(74) Representative: Modiano, Guido, Dr.-Ing.

(57) **Abstract**

The method of production of soybean juice from the soybean fine powder characterized in using the homogenizer in the process of emulsifying and dispersing the soybean fine powder into the water, and tofu using soybean juice produced by said method as a raw material.

## Description

### BACKGROUND OF THE INVENTION

### 1. Technical Field

The invention relates to a method for the production of soybean juice from soybean fine powder and tofu (bean curd) using soybean juice produced from said method as the raw material. Especially, it relates to a method for the production of soybean juice without using a large quantity of the water, a little discharge of Okara (tofu refuse) that is waste, without the fear of the environmental pollution, reducing the cost by omitting the production process and containing the nutrition of soybeans, and tofu.

### 2. Prior Art

Conventionally, soybean juice has been produced dipping the whole soybeans in the water, producing mashed soybeans, boiling it, squeezing it and lastly separating Okara and soybean juice.

### 3. Problems to be solved by the Invention

In the conventional tofu production method, it takes long time for the dipping treatment of the raw material soybeans and Okara, which becomes the industrial waste are discharged 1.6 to1.8 times of the raw material soybeans. Also the quantity of the water consumed accompanying this method uses about 6 tons until the last treatment, based on 60kg of the raw material soybeans. A large quantity of the used water is discharged as the sewage, and this was also an serious question from a viewpoint of the environmental problem.

The invention will provide the method for the production of soybean juice that solves those conventional problems, and can produce extremely easily, but quickly and surely, and efficiently, and the tofu using soybean juice produced from said method as the raw material.

### SUMMARY OF THE INVENTION

The method for the production of soybean juice in which soybeans are dispersed and homogenized into micro particles, and tofu are provided.

### DETAILED DESCRIPTION OF THE INVENTION

The method of production of soybean juice from the soybean fine powder characterized in using the homogenizer in the process of emulsifying and dispersing the soybean fine powder into the water, and tofu using soybean juice produced by said method as a raw material.

In order to solve above problems, the method of producing soybean juice from soybeans according to the invention characterizes in using the homogenizer in the process of emulsifying and diffusing the soybean fine powder into the water. Here, said homogenizer can adopt the one that is the micro-beads-type of the closed type.

And, said homogenizer can adopt the one of the type that passes the treated liquid pressured by a pump mechanism through the extremely narrow space of the valve mechanism at high speed.

Further, the invention is tofu using soybean juice produced from said method as the raw material.

The soybean fine powder to be used at the time of the production of the invention uses the soybean fine powder produced by the conventional method. The soybean fine powder referred to herein be in improved sanitary condition by removing soil and soil germs attached to soybeans according to the use of soybeans with peeled off treatment of skin. The soybean powder contains 6-8 weight % of the water and prepared in 50 to 1000-mesh particle size.

A fixed quantity of the soybean fine powder and the water are stirred, mixed, crushed by the homogenizer and homogenized. The homogenized raw soybean juice is boiled for about 5 to 8 minutes at 100 to 110°C.

Soybean juice after boiling is what generally called "soybean juice". Soybean juice thus obtained becomes the one in which soybeans are homogenized and dispersed into micro particles. And that, the homogenized and dispersed micro particles are stable for a long time, do not proceed the layer separation and also the fiber is minute one, although it is not added the synthetics such as emulsifiers etc.

For said homogenizer, known various types can be used. For example, the homogenizer of the micro-beads-type of closed type such as dyno-mill type can preferably be used.

And, the homogenizer of the type that passes the treated liquid pressured at the pump mechanism through the extremely narrow space of the valve mechanism at high speed, can preferably be used. The homogenizer of this type attain higher emulsification and dispersion, as the treated liquid becomes super-high speed flow when passing the treated liquid pressured at the pump mechanism through the extremely narrow spaces of the valve mechanism at high speed, which occurs a phenomenon to make the cavity at the edge part of the valve, called cavitations, and by the local pressure difference occurred when this cavitations disintegrate, the dispersion phase in the water is torn off.

As described above, soybean juice homogenized by using the homogenizer does not feel rough to the tongue, soft and pleasant to palate and easy to drink. And, this soybean juice comprises the fiber contained in the soybean fine powder as it is, the quantity of the fiber also reaches several times amount compared with the conventional soybean juice. Also, the yield at the production is improved. Still, the soybean protein food containing 100% nutrition of the soybeans can easily be produced using this soybean juice.

And, in case of producing tofu, if the fixed quantity of a coagulation agent is thrown into the taken out soybean juice, tofu will be produced.

Further, soybean juice and tofu obtained from the method of the invention do not use a great deal of the water, also the discharge of Okara is small, without the fear of the environmental pollution, reduces the cost by omitting the production process and contain fully the nutrition of soybeans.

### EXAMPLE:

In the following, the invention will be illustrated using an example. 160g of the finely powdered soybean is put into 1 liter of the water and stirred. Using Dynomill type KDL commercially available from WAB Corporation as the homogenizer, the mixed liquid is dispersed for 7 minutes at 5000 rpm. As a result, the finely powdered soybean that was 50 meshes at the time of the throw in becomes the soybean juice of 2000 meshes. Using said soybean juice; tofu was produced by the conventional method.

Said soybean juice and tofu had the eat feeling that perfectly do not sense the fiber which is inherent in Okara.

## Claims

1. A method for the production of soybean juice **characterized in that** a homogenizer is used in the process of the emulsifying and dispersing the soybeans fine powder into the water.

2. A method for the production of soybean juice according to claim 1, **characterized in that** said homogenizer is a micro-beads-type of a closed-type.

3. A method for the production of soybean juice according to claim 1, **characterized in that** said homogenizer is a type that passes the treated liquid pressured by a pump mechanism through the extremely narrow space of a valve mechanism at high speed.

4. Tofu using soybean juice produced from the method according to claim 1 as a raw material.
